# EUROPEAN PATENT APPLICATION

(11) **EP 2 236 930 A2**
(43) Date of publication of application: **06.10.2010**
(21) Application number: 10250651.6
(22) Date of filing: 30.03.2010
(51) Int. Cl.: F23R 3/06

(54) **Combustor for gas turbine engine**

(30) Priority: 30.03.2009 US 414237
(71) Applicant: United Technologies Corporation, Hartford, CT 06101 (US)
(72) Inventor: Snyder, Timothy S., Glastonbury, CT 06033 (US); Low, Kevin J., Portland, CT 06480 (US)
(74) Representative: Leckey, David Herbert

(57) **Abstract**

A gas turbine engine has a combustor module (10) including an annular combustor having a liner assembly that defines an annular combustion chamber. The liner assembly includes an inner liner (32) and an outer liner (34) that circumscribes the inner liner (32). The inner liner (32) has a plurality of first combustion air admission holes (66) passing therethrough and the second liner (34) has a plurality of second combustion air admission holes (68) passing therethrough. Each of the first and the second combustion air admission holes (66,68) has a swirler (70,80) disposed therein.

## Description

### Field of the Invention

This invention relates generally to combustors for gas turbine engines and, more particularly, to a combustor exhibiting lower emissions of nitrogen oxides.

### Background of the Invention

Gas turbine engines, such as those used to power modern commercial aircraft, include a compressor for pressurizing a supply of air, a combustor for burning a hydrocarbon fuel in the presence of the pressurized air, and a turbine for extracting energy from the resultant combustion gases. In aircraft engine applications, the compressor, combustor and turbine are disposed about a central engine axis with the compressor disposed axially upstream of the combustor and the turbine disposed axially downstream of the combustor.

An exemplary combustor features an annular combustion chamber defined between a radially inward liner and radially outward shell extending aft from a forward bulkhead. The radially inward liner forms a heat shield. The radially outward shell extends circumferentially about and is radially spaced from the inward liner. Arrays of circumferentially distributed combustion air holes penetrate the outward shell and the inward liner at multiple axial locations to admit combustion air into the combustion chamber along the length of the combustion chamber. A plurality of circumferentially distributed fuel injectors and associated air passages are mounted in the forward bulkhead. The fuel injectors project into the forward end of the combustion chamber to supply the fuel. The associated air passages impart a swirl to inlet air entering the forward end of the combustion chamber at the bulkhead to provide rapid mixing of the fuel and inlet air. U.S. Pat. Nos. 6,606,861; 6,810,673 and 7,094,441 disclose exemplary prior art annular combustors for gas turbine engines.

Combustion of the hydrocarbon fuel in air inevitably produces oxides of nitrogen (NOx). NOx emissions are the subject of increasingly stringent controls by regulatory authorities. Accordingly, engine manufacturers strive to minimize NOx emissions.

One combustion strategy for minimizing NOx emissions from gas turbine engines is referred to as rich burn, quick quench, lean burn (RQL) combustion. The RQL combustion strategy recognizes that the conditions for NOx formation are most favorable at elevated combustion flame temperatures, i.e. when the fuel-air ratio is at or near stoichiometric. A combustor configured for RQL combustion includes three serially arranged combustion zones: a fuel-rich combustion zone at the forward end of the combustor, a quench or dilution zone that involves the conversion of rich combustion to lean combustion, and a lean combustion zone axially aft of the quench or dilution zone. Thus, the combustion process in a combustor configured for RQL combustion has two governing states of combustion: a first state in the forward portion of the combustor that is stoichiometrically fuel-rich and that is rapidly converted in a downstream second state that is stoichiometrically fuel-lean.

During engine operation with RQL combustion, a portion of the pressurized air discharged from the compressor is directed through a diffuser to enter the combustion chamber through the inlet air swirlers to support rich-burn combustion. Concurrently, the fuel injectors introduce a stoichiometrically excessive quantity of fuel into the front portion of the combustor. The resulting stoichiometrically rich fuel-air mixture is ignited and burned to partially release the energy content of the fuel. The fuel rich character of the mixture inhibits NOx formation in the rich burn zone by suppressing the combustion flame temperature. It also resists blowout of the combustion flame during certain operating conditions or any abrupt transients to engine power and promotes good ignition of the combustor.

The fuel rich combustion products generated in the first zone of combustion propagate where the combustion process continues. Pressurized air from the compressor enters the combustion chamber radially through combustion air holes. The air mixes with the combustion products from the first zone to support further combustion and release additional energy from the fuel. The air also progressively deriches the fuel rich combustion products as they flow axially through and mix with the air introduced in the quench region. Initially, with the air addition, the fuel-air ratio of the combustion products becomes less fuel rich approaching a stoichiometric composition, causing an attendant rise in the combustion flame temperature. Since the quantity of NOx produced in a given time interval increases exponentially with flame temperature, significant quantities of NOx can be produced during the initial quench process where the combustion is rich. As quenching continues, the fuel-air ratio of the combustion products rapidly transitions through the stoichiometric state to become fuel lean, causing an attendant reduction in the flame temperature. However, until the mixture is diluted to a fuel-air ratio substantially lower than stoichiometric, the flame temperature remains high enough to generate appreciable quantities of NOx.

Finally, the deriched combustion products after quench flow axially into the downstream of the combustor where the combustion process concludes as lean-burn combustion. Additional jets of compressor discharge air may be admitted radially into the lean burn zone. The additional air supports ongoing combustion to complete combustion of the fuel and to reduce the peak temperature, as well as regulate the spatial temperature profile of the combustion products prior to entering the turbine. Regulation of the peak temperature and temperature profile protects the turbine from exposure to excessive temperatures and excessive temperature gradients.

### Summary of the Invention

A combustor for a gas turbine engine includes an inner liner circumscribing an axially extending engine axis and an outer liner circumscribing the inner liner in spaced relationship to the inner liner. The inner liner has a plurality of circumferentially spaced first combustion air admission holes passing through the inner liner. The outer liner has a plurality of circumferentially spaced second combustion air admission holes passing through the outer liner. A swirler is disposed in each of the first combustion air admission holes for imparting a swirl to the air passing through the first combustion air holes and in each of the second combustion air admission holes for imparting a swirl to the air passing through the second combustion air holes.

In an embodiment of the combustor, each of the swirlers associated with the plurality of first combustion air holes imparts a swirl in a first rotational direction to the air passing through the swirler and each of the swirlers associated with the plurality of second combustion air holes imparts a swirl to the air passing through the swirler in a second rotational direction counter to the first rotational direction. In an embodiment of the combustor, each of the swirlers associated with the plurality of first combustion air holes imparts a swirl to the air passing through the swirler that is counter to the rotational direction of the combustion product gases passing along the inner liner and each of each of the swirlers associated with the plurality of second combustion air holes imparts a swirl to the air passing through the swirler that is counter to the rotational direction of the combustion product gases passing along the outer liner.

In an embodiment of the combustor, the plurality of first combustion air admission holes are arranged in a single row at equally spaced intervals circumferentially. In an embodiment of the combustor, the plurality of second combustion air admission holes are arranged in a single row at equally spaced intervals circumferentially. The plurality of first combustion air admission holes may be arranged in a first single row extending circumferentially about the inner liner and the plurality of second combustion air admission holes may be arranged in a second single row extending circumferentially about said outer liner. The first single row of the plurality of combustion air admission holes may be axially aligned with the second single row of the plurality of combustion air admission holes. The first combustion air admission holes in the first single row are circumferentially offset from the second combustion air admission holes in the second single row.

Each swirler may have a central body, an outer shroud circumscribing the central body in space relationship from the central body, and a plurality of vanes extending between the central body and the outer shroud. In an embodiment, the vanes of each swirler are disposed at a vane angle in the range of from 10 degrees to 50 degrees. In an embodiment, the vanes of each swirler are disposed at a vane angle in the range of 15 degrees to 25 degrees.

### Brief Description of the Drawings

For a further understanding of the invention, reference will be made to the following detailed description of the invention which is to be read in connection with the accompanying drawing, where:
FIG. 1 is a block diagram representation of a gas turbine engine;
FIG. 2 is a sectioned side elevation view of an exemplary embodiment of an annular combustor according to the invention;
FIG. 3 is a perspective view showing an exemplary embodiment of annular combustor according to the invention;
FIG. 4 is an elevation view, partly in section, of a sector of the combustor taken along line 4-4 of FIG. 2;
FIG. 5 is an elevation view, partly in section, showing a swirler in a combustion air admission hole of the combustor of FIG. 4;
FIG. 6 is a perspective view showing an exemplary embodiment of a heat shield panel equipped with combustion air swirlers;
FIG. 7 is a perspective view showing an exemplary embodiment of a swirler of the invention; and
FIG. 8 is a sectioned elevation view illustrating the vane angle of the swirler vanes of swirler of FIG. 7.

### Detailed Description of the Invention

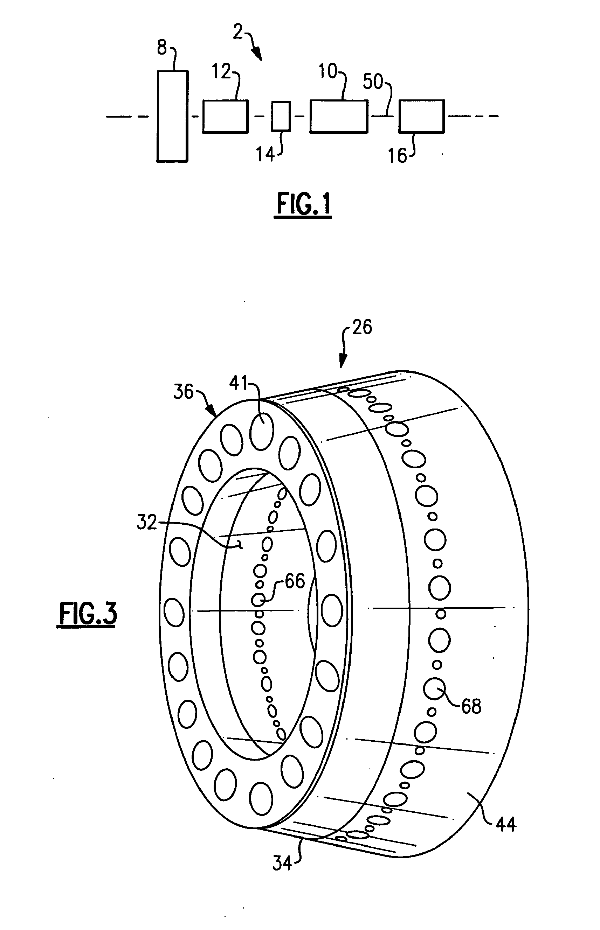

Referring initially to FIG. 1, there is depicted schematically a conventional gas turbine engine 2 includes a combustor module 10, a compressor 12 disposed forward, that is upstream with respect to flow, of the combustor module 10, a diffuser 14 extending from the outlet of the compressor to the forward end of the combustor module 10, and a turbine module 16 disposed aft, that is downstream with respect to flow, of the combustor module 10. The compressor 12, combustor module 10 and turbine module 16 are generally coaxially disposed about a central longitudinal axis 50 of the engine shaft which constitutes the centerline of the gas turbine engine. For a turbofan gas turbine engine, a large diameter fan 8 is mounted to the engine shaft forward of the compressor 12. Most large commercial jet liners of contemporary design use the turbofan version of the gas turbine engine to power the aircraft. It should be noted that small engines may have radial or centrifugal compressors, rather than axial compressors.

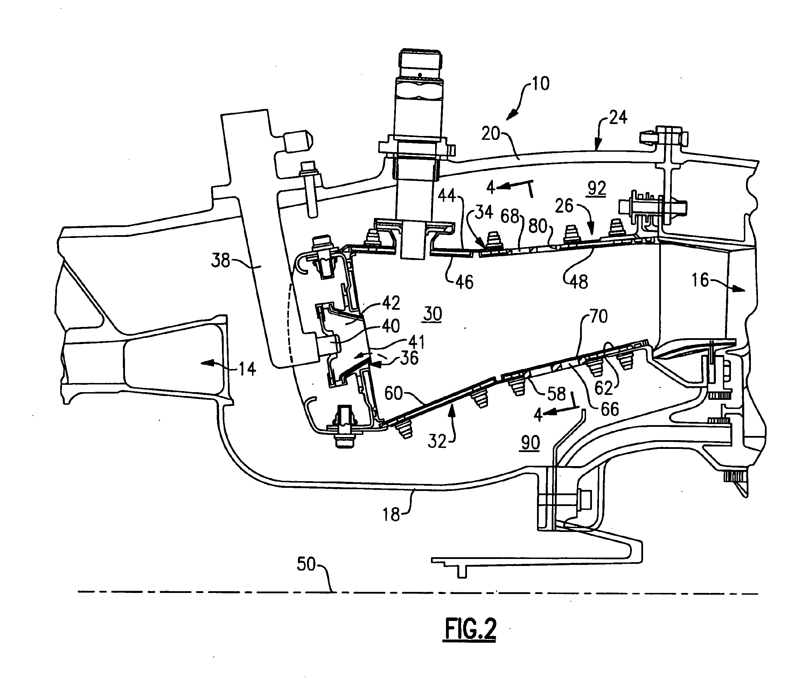

Referring now to FIG. 2, in particular, the exemplary combustor module 10 therein depicted includes a radially inner case 18 and a radially outer case 20, concentric with and circumscribing the inner case, which in cooperation define an annular pressure vessel 24 concentric with the engine axis 50. An annular combustor 26 is disposed within the annular pressure vessel 24. The combustor 26 has a liner assembly that includes a radially inner liner 32 circumscribing an axially extending engine axis 50, a radially outer liner 34 that circumscribes the inner liner 32 in spaced relationship therewith, and a bulkhead 36 which extending between the respective forward ends of the inner liner 32 and the outer liner 34. Collectively, the inner liner 32, the outer liner 34 and the forward bulkhead 36 bound the annular combustion chamber 30. The combustor 26 may have a forward section wherein the inner and outer liners converge from fore to aft and an aft section wherein the inner and outer liner converge fore to aft more gradually than the forward section. A detailed description of a combustor of this configuration is presented in the aforementioned U.S. Pat. No. 7,093,441. However, the depicted combustor configuration is exemplary and not limiting of the invention. For example, the combustor 26 may have a forward section wherein the inner and outer liners extend aft in parallel relationship and an aft section wherein the inner and outer liner converge fore to aft. A detailed description of a combustor of this configuration is presented in the aforementioned U.S. Pat. Nos. 6,606,861 and 6,810,673. In other configurations, the inner and outer liners may be parallel over the entire length of the liner assembly, or the liners may converge in a forward section and then extend parallel in an aft section, or the liners may converge in both the forward and aft sections at the same or different angles of convergence throughout, or the liners may assume geometrically differing profiles in cross-section.

The forward bulkhead 36 carries a plurality of fuel nozzles 40, for example typically from twelve (12) to twenty-four (24) depending upon the size of the engine, disposed in a circumferential array at spaced intervals about the annular combustion chamber 30. Each fuel nozzle 40 is disposed at the end of a fuel injector 38 which extends through the outer case 20 to convey fuel from an external source to the associated fuel nozzle. Each fuel nozzle 40 injects fuel through a spray head into a central stream of air emitted along the centerline of the fuel nozzle. An air passage 41, which may have a swirler 42 associated therewith as depicted in the exemplary embodiment, is operatively associated with each fuel nozzle 40. Pressurized air from the compressor is directed through the diffuser 14 into the annular plenums 90, 92 defined within the annular pressure vessel 24. A portion of this pressured air passes into the combustion chamber 30 through the air passages 41. Each swirler 42 imparts a spin to the air passing therethrough to provide rapid mixing of this air with the fuel being injected through the associated fuel nozzle 40.

In the exemplary embodiment, the inner liner 32 and the outer liner 34 are structured with a support shell and associated heat shields. The outer liner 34 comprises a single piece outer support shell 44 connected to the outer case 20, and forward and aft outer heat shield panels 46, 48 secured by fasteners (not shown) to respective forward and aft sections of the outer shell. Similarly, the inner liner 32 comprises a single piece inner support shell 58 connected to the inner case 18, and forward and aft inner heat shield panels 60, 62 secured by fasteners (not shown) to respective forward and aft sections of the inner shell. The heat shield may be formed as a circumferential array of actuate heat shield panels. The support shells 44, 58 and the heat shield panels 46, 48, 60, 62 may be perforated with a plurality of small diameter cooling air passages, not shown for simplicity, as in conventional practice. The cooling air holes in the support shells 44, 58 provide passages through which cooling passes from the air plenums 92, 90, respectively, into the gaps between shells and the heat shield panels. The cooling air holes in the heat shield panels 46, 48, 60, 62 provide passages through which the cooling air passes from the gaps between the shells and the heat panels to form a cooling film along the hot side face of the heat shield panels. Exemplary sizing and arrangements of cooling air holes are shown in the aforementioned U.S. Pat. Nos. 6,606,861 and 6,810,673. Exemplary conventional liner and heat shield panel constructions are described and shown in U.S. Pat. Nos. 7,093,439; 5,435,139 and 5,758,503. Other embodiments, including single-wall liners, are still within the scope of the invention.

In the exemplary embodiment of the combustor 26 depicted in FIGS. 2-6, the inner liner 32 has a plurality of circumferentially spaced first combustion air admission holes 66 passing therethrough and the outer liner 34 has a plurality of circumferentially spaced second combustion air admission holes 68 passing therethrough. Combustion air admitted through the first and second combustion air admission holes serves not only as secondary air to provide additional oxygen for completion of combustion on the partially-combusted combustion product gases, but also as quench mixing air to cool the main flow of partially-combusted combustion product gases for reducing high temperature region, that is hot spots, within the combustion product gases for the dual purposes of controlling the formation of oxides of nitrogen and of providing a more uniform temperature profile in the combustion product gases exiting the combustor to pass through the turbine of the gas turbine engine.

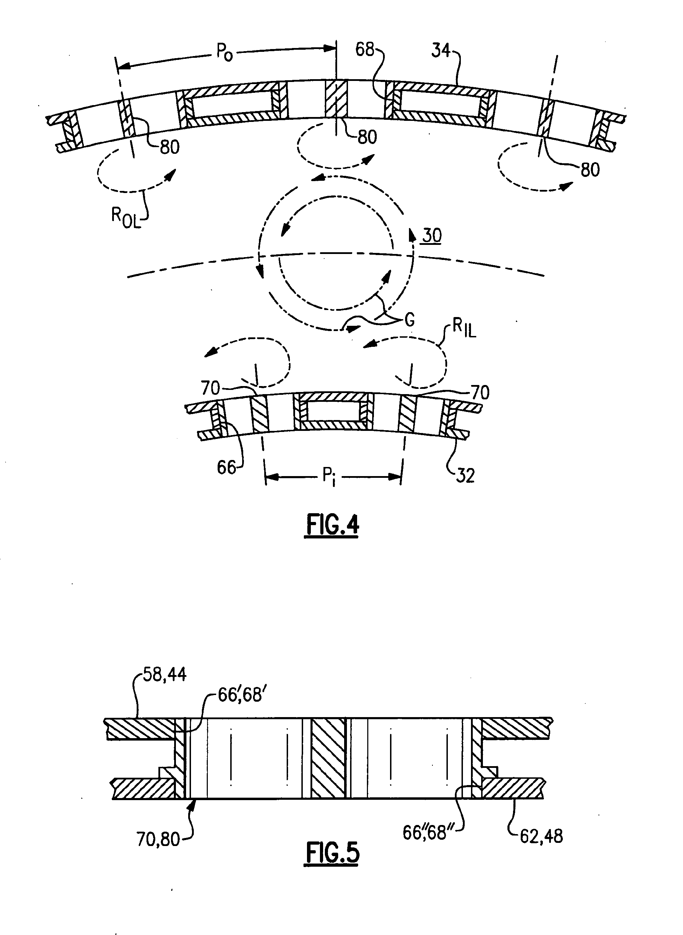

In the depicted embodiment, the plurality of first combustion air admission holes 66 are arranged in a first single row extending circumferentially about the inner liner 32 and the plurality of second combustion air admission holes 68 are arranged in a second single row extending circumferentially about the outer liner 34. The first single row of the plurality of first combustion air admission holes 66 and the second single row of the plurality of second combustion air admission holes 68 may be axially aligned relative to each other as best seen in FIG. 2. The first single row of the plurality of first combustion air admission holes 66 and the second single row of the plurality of second combustion air admission holes 68 may be circumferentially offset relative to each other as best seen in FIG. 4. As illustrated in FIG. 5, each first combustion air admission hole 66 constitutes a pair of aligned openings, namely a first opening 66' in the support shell 58 and a matching, in size and shape, second opening 66" in the heat shield panel 62. Similarly, each second combustion air admission hole 68 constitutes a pair of aligned openings, namely a first opening 68' in the support shell 44 and a matching, in size and shape, second opening 68" in the heat shield panel 48.

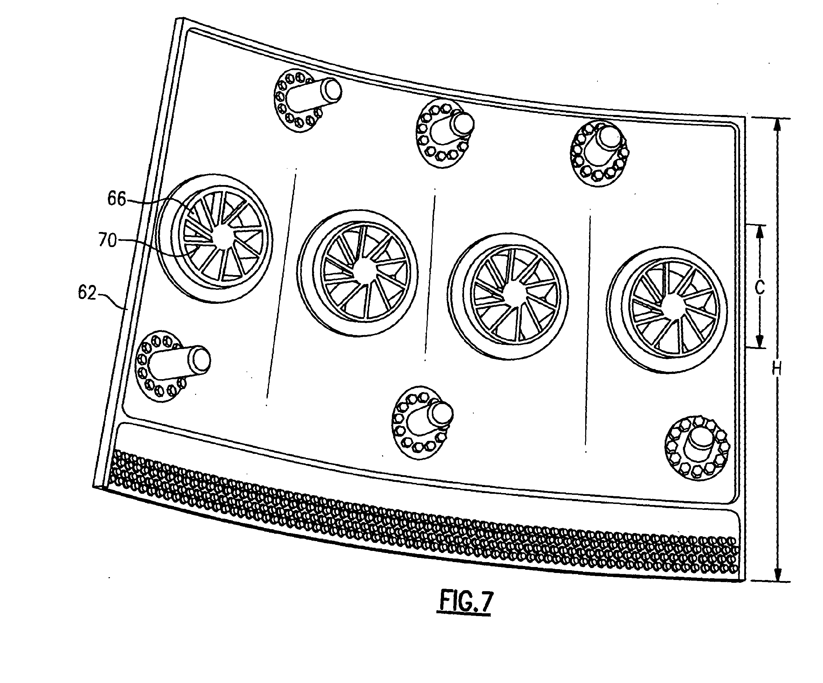

The plurality of first combustion air admission holes 66 may be distributed circumferentially in the first single row at centerline-to-centerline spacing, also referred to as pitch, P, of up to about four (4) inner diameters of the first combustion air admission holes 66, and typically at a pitch of about two (2) hole inner diameters. Similarly, the plurality of second combustion air admission holes 68 may be distributed circumferentially in the second single row at centerline-to-centerline spacing, also referred to as pitch, of up to about four (4) hole inner diameters of the second combustion air admission holes 68, and typically at a pitch of about two (2) hole inner diameters. Generally, the pitch associated with the second combustion air admission holes 68 provided in the outer liner 34 will be larger than the pitch associated with the first combustion air admission holes 66 provided in the inner liner 32. An exemplary embodiment of an heat shield panel 62 of the inner liner 32 illustrating, as viewed from the cold side of the panel with air flow passing into the paper, a single row of first combustion air admission holes 66 disposed at circumferentially spaced intervals of a pitch, P, with their respective centers along a circumferential line extending across the heat shield panel is shown in FIG. 7. The circumferential line along which the respective centers of the air admission holes are arranged is positioned along a circumferential line lying in the range, C, between approximately quarter-span and approximately mid-span of the span, H, of the heat shield panel is shown in FIG. 7. Each swirler 70 is disposed with the air outlet thereform opening to and aligned with a hole 66' in the heat shield panel 48 air inlet thereto opening to and aligned with a hole 66" in the associated support shell 44 (not shown in FIG. 7) when the outer liner 34 is assembled. The swirlers 70 may be welded to the cold side of the heat shield panel, cast integrally with the heat shield panel, or otherwise bonded or secured to the heat shield panel. It is to be understood, that the swirlers 80 are similarly arranged with respect to the second combustion air admission holes 68 in the outer liner 34 and the heat shield panel 62 is similarly constructed.

A swirler 70 is disposed in each of the first combustion air admission holes 66 for imparting a swirl to the air passing through and exiting from the first combustion air holes 66. Additionally, a swirler 80 is disposed in each of the second combustion air admission holes 68 for imparting a swirl to the air passing through and exiting from the second combustion air holes 68. In conventional prior gas turbine combustors such as those disclosed in the various aforementioned U.S. patents, the secondary combustion air admitted into this zone of the combustion chamber 30 to quench the partially-combusted combustion product gases have been introduced as a series of solid column-like jets designed to penetrate deeply into the flow of partially-combusted combustion products passing through the zone.

The region of the combustion chamber 30 into which the secondary/quench air is introduced into the combustion chamber 30 through the combustion air admission holes 66, 68 is referred to as the quench zone. The partially-combusted combustion product gases passing from the fuel-rich burn zone include unburned fuel which after traversing the quench zone is completely combusted in a fuel lean burn zone downstream of the quench zone. In the combustor 26 disclosed herein, swirl is imparted to the combustion air passing through and exiting from the combustion air admission holes 66, 68. By adding swirl to the combustion air streams admitted through the holes 66, 68, each stream of combustion air is admitted as a hollow vertical flow that results in a reduction in the extent of the penetration and elimination of jet wakes, which in turn results in increased turbulence along shear zones and shear interfaces between the two flows thereby improving mixing of the admitted combustion air into the main flow of partially-combusted combustion product gases and rapidly quenching hot spots within the combustion product gases produced in the upstream fuel rich burn zone and facilitating lower peak temperatures and a more uniform spatial temperature profile in the exhaust gases entering the turbine.

In an embodiment, the direction of swirl imparted to the respective combustion air streams exiting through the first combustion air admission holes 66 and the second combustion air admission holes 68 is set so as to oppose each other when penetrating into the partially-combusted combustion product gases produced in and exiting from the upstream fuel-rich combustion portion of the combustion chamber 30 and to counter the swirl imparted to those gases derived from the fuel/air swirler 42. These partially-combusted combustion product gases are swirling as the gases progress downstream due to the swirl imparted to the fuel and primary combustion air admitted into the combustion chamber 30 through the fuel/air swirler 42. For example, as illustrated in FIG. 4, if the partially-combusted combustion product gases are swirling in a counterclockwise direction (as viewed looking upstream from within the combustion chamber 30) as indicated by the dashed arrow line, G, these gases are passing from right to left along the hot side of the outer liner 34 and from left to right along the hot side of the inner liner 34. In this case, each of the swirlers 70 associated with the plurality of first combustion air admission holes 66 imparts a counter-clockwise (as viewed from within the combustion chamber 30) swirl to the combustion air flows exiting through the respective first combustion air admission holes 66 so as to oppose the mainstream flow of partially-combusted combustion product gases swirling generally from left to right along the hot side of the inner liner 32. Also, in this case, each of the swirlers 80 associated with the plurality of second combustion air admission holes 68 imparts a clockwise (as viewed from within the combustion chamber 30) swirl to the combustion air flows exiting through the respective second combustion air admission holes 68 so as to oppose the mainstream flow of partially-combusted combustion product gases swirling generally from right to left along the hot side of the outer liner 34.

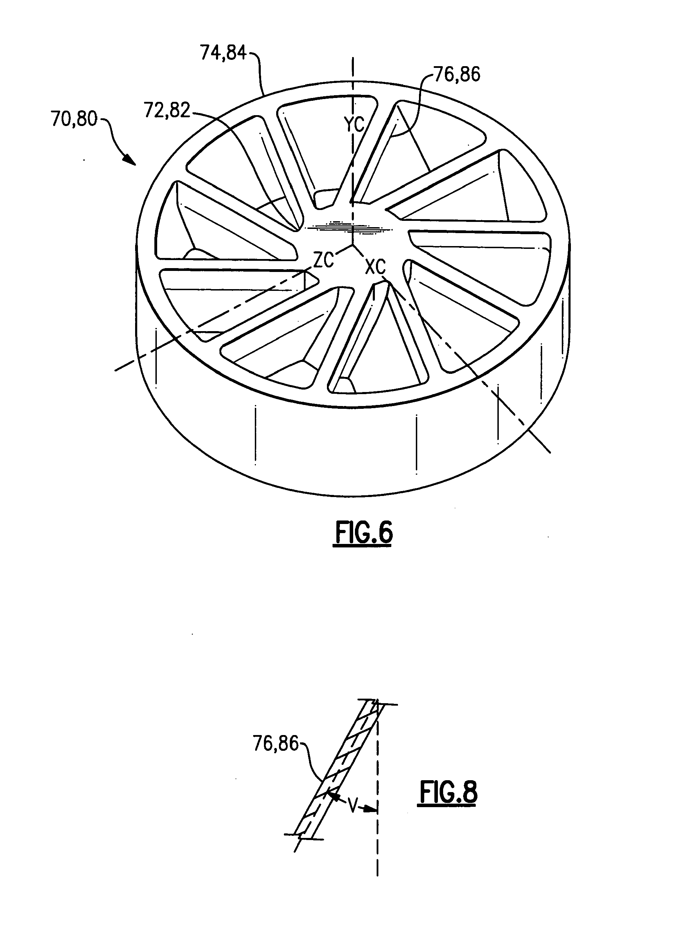

Referring now to FIG. 6, each of the swirlers 70, 80 includes a central disk-like hub 72, 82, an outer shroud 74, 84 disposed radially outwardly of and circumscribing the central hub 72, 82, and a plurality of circumferentially distributed vanes 76, 86 extending outwardly from the central hub to the inner wall of the outer shroud 74, 84. The vanes 76, 86 are disposed at a desired vane angle, V, as best seen in FIG. 8, so as to impart a desired degree of swirl to the combustion air admitted through the swirlers 70, 80. The degree of swirl imparted to the combustion air is directly proportional to the magnitude of the vane angle, a smaller vane angle imparting a lesser degree of swirl to the combustion air and a larger vane angle imparting a greater degree of swirl to the combustion air. The vanes 76, 86 may be disposed within the swirlers 70, 80 at a vane angle, V, as measured in degrees departure from the vertical, ranging from as small as about 10 degrees to as high as about 50 degrees, and nominally in the range from about 15 degrees to about 25 degrees, and about 20 degrees in a typical installation.

The swirl strength desired, and therefore the vane angle selected for a given application, will depend on the ratio of the momentum of the quench air jets admitted through the first and second combustion air admission holes 66, 68 to the momentum of the main flow of the combustion product gases. For a given combustor design, the greater that the magnitude of this momentum ratio is, the higher the swirl strength that can be applied while still achieving sufficient penetration and mixing, and therefore the larger the vane angle desired. Conversely, the lower that the magnitude of this momentum ratio is, the smaller the swirl strength that can be applied while still achieving sufficient penetration and mixing, and therefore the smaller the vane angle desired.

The number of vanes in a given swirler will depend upon the particular application. In general, the central hub 72, 82 must be sufficiently large to package and support the number vanes 74, 84 extending between the central hub 72, 82 and the outer impeller 76, 86, but small enough that the central hub, in combination with the vanes extending therefrom, to leave at least 70%, by line of sight, of the area circumscribed by the outer impeller 76, 86 open to air flow therethrough. For purposes of illustration, but not limitation, in an exemplary embodiment, the swirlers 70, 80 may have a central hub having a diameter of about 0.1875 inches (4.7625 millimeters), an outer shroud having an inner diameter of about 0.65 inches (16.5 millimeters), and have ten (10) vanes, each disposed at a vane angle of twenty (20) degrees.

The terminology used herein is for the purpose of description, not limitation. Specific structural and functional details disclosed herein are not to be interpreted as limiting, but merely as basis for teaching one skilled in the art to employ the present invention. While the present invention has been particularly shown and described with reference to the exemplary embodiments as illustrated in the drawing, it will be recognized by those skilled in the art that various modifications may be made without departing from the scope of the invention. Those skilled in the art will also recognize the equivalents that may be substituted for elements described with reference to the exemplary embodiments disclosed herein without departing from the scope of the present invention.

For example, although the present invention is described herein with application to a gas turbine engine of the type commonly used on aircraft, it is to be understood that the invention disclosed herein may also be applied to industrial gas turbine engines. Therefore, it is intended that the present disclosure not be limited to the particular embodiment(s) disclosed as, but that the disclosure will include all embodiments falling within the scope of the appended claims.

## Claims

1. A combustor (10) for a gas turbine engine, comprising:
an inner liner (32) circumscribing an axially extending engine axis (50), said inner liner (32) having a plurality of circumferentially spaced first combustion air admission holes (66) penetrating therethrough;
an outer liner (34) circumscribing said inner liner (32) in spaced relationship to said inner liner (32), said outer liner (34) having a plurality of circumferentially spaced second combustion air admission holes (68) penetrating therethrough;
each of the first combustion air admission holes (66) having a swirler (70) disposed therein for imparting a swirl to the air passing through the first combustion air admission holes (66); and
each of the second combustion air admission holes (68) having a swirler (80) disposed therein for imparting a swirl to the air passing through the second combustion air admission holes (68).

2. The combustor for a gas turbine engine as recited in claim 1 wherein each of the swirlers (70) associated with the plurality of first combustion air holes (66) imparts to the air passing therethrough a swirl in a first rotational direction; and each of the swirlers (80) associated with the plurality of second combustion air holes (68) imparts to the air passing therethrough a swirl in a second rotational direction counter to the first rotational direction.

3. The combustor for a gas turbine engine as recited in claim 1 or 2 wherein each of the swirlers (70) associated with the plurality of first combustion air holes (66) imparts a swirl to the air passing through the swirler (70) that is counter to the rotational direction of a flow of combustion product gases within the combustor (10) along the inner liner (32).

4. The combustor for a gas turbine engine as recited in any preceding claim wherein each of the swirlers (80) associated with the plurality of second combustion air holes (68) imparts a swirl to the air passing through the swirler (80) that is counter to the rotational direction of a flow of combustion product gases within the combustor along the outer liner (34).

5. The combustor for a gas turbine as recited in any preceding claim wherein the plurality of first combustion air admission holes (66) are arranged in a single row at equally spaced intervals circumferentially.

6. The combustor for a gas turbine as recited in any preceding claim wherein the plurality of second combustion air admission holes (68) are arranged in a single row at equally spaced intervals circumferentially.

7. The combustor for a gas turbine as recited in any preceding claim wherein the plurality of first combustion air admission holes (66) are arranged in a first single row extending circumferentially about said inner liner (32) and the plurality of second combustion air admission holes (68) are arranged in a second single row extending circumferentially about said outer liner (34).

8. The combustor for a gas turbine as recited in claim 7 wherein the first single row of the plurality of combustion air admission holes (66) is axially aligned with the second single row of the plurality of combustion air admission holes (68).

9. The combustor for a gas turbine as recited in claim 8 wherein the first combustion air admission holes (66) in the first single row are circumferentially offset from the second combustion air admission holes (68) in the second single row.

10. The combustor for a gas turbine as recited in any preceding claim wherein each swirler (70) disposed in the plurality of first combustion air admission holes (66) has a central body (72), an outer shroud (74) circumscribing the central body (72) in space relationship from the central body (72), and a plurality of vanes (76) extending between the central body (72) and the outer shroud (74).

11. The combustor for a gas turbine as recited in claim 10 wherein the vanes (76) of each swirler (70) are disposed at a vane angle in the range of from about 10 degrees to about 50 degrees, for example in the range of about 15 degrees to about 25 degrees.

12. The combustor for a gas turbine as recited in any preceding claim wherein each swirler (80) disposed in the plurality of second combustion air admission holes (68) has a central body (82), an outer shroud (84) circumscribing the central body (82) in space relationship from the central body (82), and a plurality of vanes (86) extending between the central body (82) and the outer shroud (84).

13. The combustor for a gas turbine as recited in claim 12 wherein the vanes (86) of each swirler (80) are disposed at a vane angle in the range of from about 10 degrees to about 50 degrees, for example in the range of about 15 degrees to about 25 degrees.

14. A combustor (10) for a gas turbine engine, comprising:
an inner liner (32) circumscribing an axially extending engine axis (50), said inner liner (32) having a plurality of circumferentially spaced first combustion air admission holes (66) penetrating therethrough;
an outer liner (34) circumscribing said inner liner (32) in spaced relationship to said inner liner (32), said outer liner (34) having a plurality of circumferentially spaced second combustion air admission holes (68) penetrating therethrough;
each of the first combustion air admission holes (66) having a swirler (70) disposed therein for imparting a swirl to the air passing through the first combustion air admission holes (66) in a first rotational direction that is counter to the rotational direction of a flow of combustion product gases within the combustor along the inner liner (32); and
each of the second combustion air admission holes (68) having a swirler (80) disposed therein for imparting a swirl to the air passing through the second combustion air admission holes (68) in a second rotational direction that is counter to the rotational direction of a flow of combustion product gases within the combustor along the outer liner (34).
